# EUROPÄISCHE PATENTSCHRIFT

(11) **EP 3 832 188 B1**
(45) Veröffentlichungstag und Bekanntmachung des Hinweises auf die Patenterteilung: **07.09.2022**
(21) Anmeldenummer: 20210891.6
(22) Anmeldetag: 01.12.2020
(51) Int. Cl.: F16L 41/08, F16L 41/14, E03F 3/04, F16L 15/00, F16L 41/00

(54) **ANSCHLUSSSYSTEM MIT EINEM ANSATZELEMENT**
CONNECTION SYSTEM WITH AN ADAPTATION ELEMENT
SYSTÈME DE CONNEXION AVEC UN ÉLÉMENT ADAPTATIF

(30) Priorität: 04.12.2019 DE 202019106755 U
(43) Veröffentlichungstag der Anmeldung: 09.06.2021
(73) Patentinhaber: REHAU Industries SE & Co. KG, 95111 Rehau (DE)
(72) Erfinder: Lipphardt, Tobias, 91334 Helmhofen (DE); Sieber, Jürgen, 91074 Herzogenaurach (DE)

(56) Entgegenhaltungen:
- EP-A1- 3 489 565
- DE-U1-202015 106 589
- DE-U1-202015 106 967
- US-B1- 6 233 782

## Beschreibung

Die Erfindung betrifft ein Anschlusssystem zum Anschließen eines Rohres an ein Hauptrohr. Weiterhin betrifft die Erfindung ein Rohrsystem, das mit einem derartigen Anschlusssystem ausgestattet ist.

Ein solches Anschlusssystem gemäß dem Oberbegriff des Anspruchs 1 ist aus der EP 3489565 A bekannt.

Der Anschluss eines Rohres an ein Hauptrohr ist ein häufig anzutreffender Fall, wenn beispielsweise Wohngebiete erschlossen werden und Abwasser- und Regenwasserrohre aus den einzelnen Häusern oder Wohnblocks an ein Hauptrohr anzubinden sind. Hierzu sind Anschlusssysteme notwendig, die einfach zu installieren sind, die die für diesen Zweck notwendige Dichtheit aufweisen und kostengünstig sind. Insbesondere ist eine solche nachträgliche Installation an einem Hauptrohr eine Arbeit, die unter Kostengesichtspunkten so einfach wie möglich bewerkstelligt werden soll, dennoch aber einen praktikablen - vor allem aber dauerhaften und dichten - Anschluss herzustellen.

So ist beispielsweise aus der DE 10 2008 021 470 A1 bekannt, ein Rohr mithilfe eines Anschlusssystems an ein Hauptrohr anzuschließen. Die Dichtheit wird hierbei durch einen Elastomereinsatz erreicht, der in der Queröffnung des Hauptrohres positioniert ist. Allgemein besteht ein großes Interesse, einfachere Anschlusssysteme mit einem hohen Grad an Dichtheit zur Verfügung gestellt zu bekommen, die des Weiteren in schneller und sicherer Weise installierbar sind.

Die vorgenannte bewährte Technik stößt an ihre Grenzen, wenn ein Hauptrohr aus Beton, das stahlarmiert ist, vorliegt. Bei einem solchen Hauptrohr wird zwangsläufig die Stahlbewehrung im Bereich der herzustellenden Queröffnung freigelegt. Dies kann unter dem Einfluss von Feuchtigkeit und Sauerstoff rosten, was zu einer Beschädigung bis hin zur partiellen Zerstörung des Hauptrohres führen kann.

Ein Anschlusssystem zum Anschließen eines Rohres an ein solches Hauptrohr, insbesondere an ein Hauptrohr aus stahlarmiertem Beton, muss daher nicht nur die Dichtheit an der Queröffnung sicherstellen, sondern auch verhindern, dass in den Spalt zwischen der Innenoberfläche des Hauptrohres und dem Anschlusssystem Feuchtigkeit und Sauerstoff eindringt, um so die Bewehrung vor Rostbildung und einer nachfolgenden Beschädigung oder Zerstörung des Hauptrohres zu schützen.

Gleiches gilt auch für Schächte, an denen Anschlüsse nachträglich herzustellen sind, auch diese sind häufig aus stahlarmiertem Beton hergestellt.

Da eine Vielzahl von unterschiedlichen Hauptrohren - insbesondere solchen mit einer unterschiedlichen Dicke der Rohrwandung - verlegt sind, besteht der Bedarf darin, dass eine möglichst universelle, das heißt einen großen Rohrwanddickenbereich abdeckende Lösung in Form eines Anschlusssystems am Markt verfügbar ist.

Eine weitere Aufgabe der Erfindung ist es, ein Rohrsystem anzugeben, das ein Anschlusssystem umfasst.

Hier setzt die Erfindung ein, die es sich zur Aufgabe gemacht hat, ein Anschlusssystem und ein Rohrsystem bereitzustellen, das die o.g. Probleme löst.

Die Lösung der ersten Aufgabe erfolgt gemäß Anspruch 1.

Es wurde im Rahmen der vorliegenden Erfindung erkannt, dass ein Anschlusssystem zum Anschließen eines Rohres an ein Hauptrohr, einen Schacht, oder dergleichen, an einer Queröffnung, wobei das Anschlusssystem zu diesem Zweck mit dem Hauptrohr oder dem Schacht verbindbar ist, mit einem hohlstopfenförmigen, zumindest teilweise weichen Installationseinsatz, dessen Außenseite an die Queröffnung angepasst ist, und dessen Innenseite einen konischen Schraubbereich aufweist, wobei der Installationseinsatz einen Endabschnitt aufweist, der durch die Queröffnung des Hauptrohres oder Schachts in dieses / diesen teilweise einschiebbar ist, und wobei eine äußere Anlagefläche des Installationseinsatzes in einem Verbindungszustand, in dem das Anschlusssystem mit dem Hauptrohr oder Schacht verbunden ist, wenigstens teilweise eine Hauptrohrinnenfläche die an die Queröffnung angrenzt und diese umgibt, kontaktiert, und einem relativ härteren Anschlussstutzen, der ein Eingriffsende, einen konischen Mittelteil mit Außengewinde und ein Antriebsende aufweist, diese Aufgabe löst, wenn erfindungsgemäß vorgesehen ist, dass an dem Endabschnitt des Installationseinsatzes eine Stirnfläche ausgebildet ist, die ein Verbindungsmittel aufweist, und dass ein Ansatzelement, welches eine erste Ansatzelementstirnfläche aufweist, die kongruent zur Form der Stirnfläche am Endabschnitt des Installationseinsatzes ausgebildet ist, wobei die erste Ansatzelementstirnfläche ein erstes Ansatzelementverbindungsmittel aufweist, und ein an dem der ersten Ansatzelementstirnfläche gegenüberliegenden Ende eine zweite Ansatzelementstirnfläche ausgebildet ist, die an die Form der Innenoberfläche des Hauptrohres, des Schachts, oder dergleichen im Bereich der Queröffnung angepasst ist, mit dem Installationseinsatz verbunden ist.

Mithilfe dieses Anschlusssystems gelingt es, eine vollständige Dichtheit zwischen dem angeschlossenen Rohr und dem Hauptrohr, und insbesondere einem Hauptrohr aus stahlarmiertem Beton, herzustellen.

Weiterhin ist es mit diesem Anschlusssystem gemäß vorliegender Erfindung möglich, eine möglichst universelle, das heißt einen großen Rohrwanddickenbereich abdeckende Lösung für den Anschluss eines Rohres an ein Hauptrohr oder einen Schacht oder dergleichen zur Verfügung zu stellen.

Hierbei kann der Endabschnitt des Installationseinsatzes nach Bedarf mit einem oder mehreren Ansatzstücken verlängert werden, so dass auf jeden Fall bei der Installation des Anschlusssystems die freiliegende Stahlbewehrung des Hauptrohres aus stahlarmiertem Beton vor dem Einfluss von Feuchtigkeit und Sauerstoff geschützt ist. Hierzu kann der Endabschnitt des Installationseinsatzes ohne Mühe auf die notwendige Abmessung verlängert werden, wobei die Länge des Endabschnitts dann so zu wählen ist, dass auf jeden Fall alle freiliegenden Bewehrungen bei der Installation bedeckt sind.

Ein derartiges erfindungsgemäßes Anschlusssystem ist gegenüber dem Stand der Technik wesentlich verbessert, was den Schutz der Stahlbewehrung des Hauptrohres angeht, es ist einfach herzustellen, kostengünstig bereitzustellen und ohne besonderen Aufwand zu installieren, und in hohem Maße fluiddicht.

Bei der vorliegenden Erfindung kann es sich als überaus vorteilhaft erweisen, wenn vorgesehen ist, dass das Anschlusssystem derart ausgebildet ist, dass das Verbindungsmittel an der Stirnfläche am Endabschnitt des Installationseinsatzes einen Hinterschnitt aufweist. Durch das Vorsehen, dass das Verbindungsmittel an der Stirnfläche am Endabschnitt des Installationseinsatzes einen Hinterschnitt aufweist, kann in einfacher Weise ein feste und fluiddichte Verbindung des Ansatzstückes mit dem Installationseinsatz realisiert werden.

In einer besonders vorteilhaften Ausführung der Erfindung kann vorgesehen sein, dass das Verbindungsmittel pfeilförmig und / oder pilzkopfförmig geformt ist.

Durch die pfeilförmig und / oder pilzkopfförmig Ausformung des Verbindungsmittels kann eine feste, gesicherte und nur schwer lösbare Verbindung zwischen dem Ansatzstück und dem Installationseinsatz hergestellt werden.

Die vorliegende Erfindung kann weiter dadurch aufgewertet werden, indem bei dem Anschlusssystem vorgesehen sein kann, das erste Ansatzelementverbindungsmittel des Ansatzelements kongruent zur Form des Verbindungsmittels an der Stirnfläche am Endabschnitt des Installationseinsatzes auszubilden oder die gleiche Form wie das Verbindungsmittel an der Stirnfläche am Endabschnitt des Installationseinsatzes vorzugeben.

Durch die Maßnahme, das erste Ansatzelementverbindungsmittel des Ansatzelements kongruent zur Form des Verbindungsmittels an der Stirnfläche am Endabschnitt des Installationseinsatzes auszubilden oder die gleiche Form wie das Verbindungsmittel an der Stirnfläche am Endabschnitt des Installationseinsatzes vorzugeben, kann in besonders einfacher Weise ein Anschlusssystem realisiert werden, das in einfacher Weise zusammenbaubar ist, wobei eine feste, sichere und fluiddichte Verbindung des Installationseinsatzes mit dem Ansatzelement herstellbar ist.

Als besonders vorteilhaft kann sich bei der vorliegenden Erfindung erweisen, wenn das Anschlusssystem so ausgebildet ist, dass das Ansatzelement eine zweite Ansatzelementstirnfläche aufweist, die der ersten Ansatzelementstirnfläche gegenüberliegt, wobei an der zweiten Ansatzelementstirnfläche ein zweites Ansatzelementverbindungsmittel ausgebildet ist, und wobei das zweite Ansatzelementverbindungsmittel des Ansatzelements kongruent zur Form des ersten Ansatzelementverbindungsmittels ausgeformt ist oder die gleiche Form wie das erste Ansatzelementverbindungsmittel aufweist.

Auf diese Weise ist es leicht möglich, ein weiteres Ansatzelement mit dem bereits mit dem Installationseinsatz verbundenen Ansatzelement zu verbinden. Die Verbindung zwischen den zwei Ansatzelementen ist dabei fluiddicht ausgebildet, sicher und fest. Es versteht sich, dass weitere Ansatzelemente nach diesem Schema verbunden werden können, was im Detail in den Figuren gezeigt ist.

In einer bevorzugten Ausführung der Erfindung kann vorgesehen sein, dass das Anschlusssystem derartig ausgeführt ist, dass das Ansatzelement eine Höhe von 10 mm (Millimeter) oder von 15 mm oder von 20 mm oder von 25 mm oder von 30 mm aufweist.

Hiermit kann sichergestellt werden, dass durch eine Kombination von Ansatzelementen verschiedener Höhe zusammen mit dem Installationseinsatz die Wanddicke des Hauptrohres ganz oder weitestmöglich abgedeckt und so vor der schädlichen Einwirkung von Feuchtigkeit und Sauerstoff auf die freiliegende Bewehrung der Bewehrung des Stahlbetonrohrs bewahrt wird.

Mit großem Vorteil kann das Anschlusssystem derartig ausgebildet sein, dass der Anschlussstutzen und / oder das Ansatzelement ein Polymermaterial enthält oder aus einem Polymermaterial besteht, wobei das Polymermaterial bevorzugt ein Thermoplast, und besonders bevorzugt ein Polyolefin, wie beispielsweise ein Polypropylen oder ein Polyethylen oder ein Polybutylen oder ein Polyamid oder ein Copolymeres der Vorgenannten, oder ein Polyvinylchlorid ist und / oder der Installationseinsatzes ein elastomeres Polymermaterial enthält oder aus einem solchen besteht.

Anschlussstutzen und Installationseinsatz aus Polymermaterial bzw. solche, die ein Polymermaterial enthalten, sind langlebig, inert, stabil, weisen ein geringes Gewicht auf, sind einfach handhabbar, leicht installierbar und können kostengünstig bereitgestellt werden. Für den Installationseinsatz, der aus einem Elastomer-Polymermaterial besteht oder ein solches enthält, kann die Herstellung aus Gummi, Styrol-Butadien-Kautschuk (SBR), Ethylen-Propylen-Dien-Kautschuk (EPDM), Acrylnitril-Butadien-Kautschuk (NBR), Thermoplastisches Elastomer (TPE) oder anderen erfolgen.

Die Aufgabe der vorliegenden Erfindung, ein Rohrsystem anzugeben, erfährt ihre Lösung in Anspruch 8.

Im Rahmen der vorliegenden Erfindung wurde erkannt, dass ein Rohrsystem dann besonders günstig ausgebildet ist, wenn es wenigstens ein Anschlusssystem, wie vorstehend beschrieben, aufweist. Ein solches Rohrsystem ist gegenüber dem Stand der Technik gerade im Hinblick auf die Dichtigkeit und den Schutz der freiliegenden Bewehrung des Hauptrohres wesentlich verbessert.

Durch ein solches erfindungsgemäßes Anschlusssystem wird ein Rohrsystem in ganz besonderer Weise technisch aufgewertet. Daraus resultieren dann die vorstehend beschriebenen Vorteile.

Das erfindungsgemäße Anschlusssystem ist wie folgt zu montieren:
Zunächst ist im Hauptrohr nach bekanntem Verfahren eine Queröffnung herzustellen, das kann beispielsweise durch einen Bohrvorgang oder einen Fräsvorgang geschehen. Wenn die Queröffnung im Hauptrohr hergestellt ist und wenn der Rand der Queröffnung und die Hauptrohrinnenfläche, die durch den Bohr- oder Fräsprozess erzeugt wurde und die Queröffnung begrenzt, gegebenenfalls zu glätten ist, ist dieses im Hinblick auf die Wanddicke des Hauptrohres an der Queröffnung zu vermessen.

Der Endabschnitt des Installationseinsatzes ist entsprechend der ermittelten Wanddicke des Hauptrohres an der Queröffnung soweit mit einem oder mehreren Ansatzelementen zu verlängern, dass das Ende des Endabschnitts nicht über den inneren Rand der Queröffnung des Hauptrohres in das Innere des Hauptrohres hineinragt.

Zum Auswahl der Ansatzelemente kann eine auf der Innenseite der Ansatzelemente angebrachte Längenangabe genutzt werden. Das bzw. die Ansatzelemente können mit dem Installationseinsatz bzw. miteinander in einfacher Weise sicher verbunden werden. Anschließend ist der Installationseinsatz mit dem Endabschnitt voraus in die Queröffnung des Hauptrohres einzuführen.

Der Anschlussstutzen ist dann soweit - beispielsweise zweieinhalb Umdrehungen - in den Installationseinsatz einzudrehen, dass die Dichtheit des Anschlusssystems hergestellt ist. Durch diese Technik ist sichergestellt, dass eine vollständige Dichtheit des Anschlusssystems durch ein sicheres und dichtes Anliegen der äußeren Anlagefläche des Installationseinsatzes und des bzw. der Ansatzelemente an der Hauptrohrinnenfläche des Hauptrohres vorliegt.

Dadurch ist die Dichtheit gegen ein Hinterlaufen bzw. Hinterwandern der äußeren Anlagefläche des Installationseinsatzes und des bzw. der Ansatzelemente sichergestellt. Wenn dies geschehen ist, ist der ordnungsgemäße Sitz des Anschlusssystems erreicht. Insbesondere sind so alle frei liegenden Bewehrungen des Hauptrohres im Bereich der Queröffnung bei der Installation bedeckt und geschützt.

Ein derartiges erfindungsgemäßes Anschlusssystem ist gegenüber dem Stand der Technik wesentlich verbessert, was den Schutz der Stahlbewehrung des Hauptrohres angeht, es ist einfach herzustellen, kostengünstig bereitzustellen und ohne besonderen Aufwand zu installieren, und in hohem Maße fluiddicht.

Der Installationseinsatz, der Anschlussstutzen und das Ansatzelement der vorliegenden Erfindung können in einem Polymerformgebungsprozess, wie einem Spritzgussprozess oder einem Rotationsgießprozess oder einem Rotationssinterprozess oder einem Pressprozess oder einem Tiefziehprozess oder einem Extrusionsblasprozess oder einem additiven Fertigungsprozess, wie einem 3D-Druckprozess, oder einer Kombination der vorstehend aufgeführten Prozesse hergestellt sein.

Die vorstehend genannten Prozesse sind geeignet, die vorstehend Genannten gemäß vorliegender Erfindung in großer Stückzahl reproduzierbar, maßhaltig und kostengünstig herzustellen.

Hierdurch werden Installationseinsätze, Anschlussstutzen und Ansatzelemente bereitgestellt, die äußerst widerstandsfähig und fest sind, und die Ansprüche der Kunden bzw. die Vorgaben der einschlägigen Spezifikationen für ihre Anwendung erfüllen.

Es kann sich im Rahmen der vorliegenden Erfindung weiterhin als sehr praktikabel ergeben, wenn vorgesehen ist, dass der Installationseinsatz und / oder der Anschlussstutzen und / oder das Ansatzelement in einem additiven Fertigungsprozess, wie einem 3D-Druckprozess hergestellt ist.

Ein solcher Prozess ist geeignet, einen Installationseinsatz und / oder einen Anschlussstutzen gemäß vorliegender Erfindung in großer Stückzahl reproduzierbar, maßhaltig und kostengünstig herzustellen.

So kann insbesondere vorgesehen sein, dass der Installationseinsatz und / oder der Anschlussstutzen und / oder das Ansatzelement ganz oder teilweise unter Verwendung eines generativen Fertigungsverfahrens, beispielsweise durch ein 3-D-Druckverfahren, hergestellt ist.

Hierzu kann mit Vorteil ein datenverarbeitungsmaschinenlesbares dreidimensionales Modell für die Herstellung genutzt werden.

Die Erfindung umfasst auch ein Verfahren zur Erzeugung eines datenverarbeitungsmaschinenlesbaren dreidimensionalen Modells zur Verwendung in einem Herstellungsverfahren für einen Installationseinsatz und / oder einen Anschlussstutzen und / oder ein Ansatzelement. Hierbei umfasst das Verfahren insbesondere auch die Eingabe von Daten, die einen Installationseinsatz und / oder einen Anschlussstutzen und / oder ein Ansatzelement darstellen, in eine Datenverarbeitungsmaschine und die Nutzung der Daten, um einen Installationseinsatz und / oder einen Anschlussstutzen und / oder ein Ansatzelement als dreidimensionales Modell darzustellen, wobei das dreidimensionale Modell geeignet ist zur Nutzung bei der Herstellung eines Installationseinsatzes und / oder eines Anschlussstutzens und / oder eines Ansatzelements. Ebenfalls umfasst ist bei dem Verfahren eine Technik, bei der die eingegebenen Daten eines oder mehrerer 3D-Scanner, die entweder auf Berührung oder berührungslos funktionieren, wobei bei letzteren Energie auf einen Installationseinsatz und / oder einen Anschlussstutzen und / oder ein Ansatzelement abgegeben wird und die reflektierte Energie empfangen wird, und wobei ein virtuelles dreidimensionales Modell eines Installationseinsatzes und / oder eines Anschlussstutzens und / oder eines Ansatzelements unter Verwendung einer computer-unterstützten Design-Software erzeugt wird.

Das Fertigungsverfahren kann ein generatives Pulverbettverfahren, insbesondere selektives Laserschmelzen (SLM), selektives Lasersintern (SLS), selektives Hitzesintern (Selective Heat Sintering - SHS), selektives Elektronenstrahlschmelzen (Electron Beam Melting - EBM / Electron Beam Additive Manufacturing - EBAM) oder Verfestigen von Pulvermaterial mittels Binder (Binder Jetting) umfassen. Das Fertigungsverfahren kann ein generatives Freiraumverfahren, insbesondere Auftragsschweißen, Wax Deposition Modeling (WDM), Contour Crafting, Metall-Pulver-Auftragsverfahren (MPA), Kunststoff-Pulver-Auftragsverfahren, Kaltgasspritzen, Elektronenstrahlschmelzen (Electron Beam Welding - EBW) oder Schmelzeschichtungsverfahren wie Fused Deposition Modeling (FDM) oder Fused Filament Fabrication (FFF) umfassen. Das Fertigungsverfahren kann ein generatives Flüssigmaterialverfahren, insbesondere Stereolithografie (SLA), Digital Light Processing (DLP), Multi Jet Modeling (MJM), Polyjet Modeling oder Liquid Composite Moulding (LCM) umfassen. Ferner kann das Fertigungsverfahren andere generative Schichtaufbauverfahren, insbesondere Laminated Object Modelling (LOM), 3D-Siebdruck oder die Lichtgesteuerte Elektrophoretische Abscheidung umfassen.

Anwendung findet die Erfindung überall dort, wo aus Rohren bzw. Rohrformteilen, Schächten und weiteren Bauelementen Rohrsysteme gebaut werden, bei denen ein Rohr an ein Hauptrohr bzw. einen Schacht anzuschließen ist.

Es ergeben sich so Anwendungen der vorliegenden Erfindung insbesondere im Bereich der drucklosen Leitungen zur Aufnahme, Leitung und Speicherung von Fluiden. Dies betrifft in erster Linie Systeme für die Abwasser- und solche für die Regenwasserbewirtschaftung. Aber auch in anderen Bereichen, wie beispielsweise der Schwimmbadtechnik, der Landwirtschaft, dem Industrieanlagenbau und weiteren Anwendungsfeldern kann die Erfindung vorteilhaft genutzt werden.

Bei der vorliegenden Erfindung wird davon ausgegangen, dass Rohre bzw. Rohrformteile und die zu verbindenden Bauelemente im Bereich der herzustellenden fluiddichten Verbindung einen Abschnitt mit kreisförmigem Querschnitt aufweisen. Wesentliche Teile der Figurenbeschreibung beziehen sich darauf.

Die Erfindung umfasst selbstverständlich auch Abschnitte mit Querschnitten bei Rohren bzw. Rohrformteilen und zu verbindenden Bauelementen, die von der Kreisform abweichen, also beispielsweise elliptisch, eiförmig, eckig, abgerundet eckig oder Mischformen der vorstehend Genannten darstellen.

Der Vorteil der vorliegenden Erfindung besteht insbesondere auch darin, dass durch die vorstehend geschilderten konstruktiven Maßnahmen eine Abdichtung gegen die Durchbruchlaibung des Durchbruchs, hier als Hauptrohrinnenfläche bezeichnet, erfolgt, wobei die frei liegende Bewehrung eines stahlarmierten Betonhauptrohrs geschützt ist, so dass ein Anschlusssystem vorliegt, das gegenüber solchen des Standes der Technik verbessert ist.

Immer wenn vorstehend von Hauptrohren die Rede war, kann stets ein Hauptrohr durch einen Schacht ersetzt werden, ohne die vorliegende Erfindung zu verlassen.

Weitere wichtige Merkmale und Vorteile der Erfindung ergeben sich aus den Unteransprüchen, aus den Figuren und aus der zugehörigen Figurenbeschreibung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung sind in den Fig. dargestellt und wird in der nachfolgenden Beschreibung näher erläutert.

Hierzu zeigen:
- Fig. 1: eine schematische seitliche geschnittene Ansicht des Anschlusssystems mit Ansatzelementen in einer ersten und einer zweiten Ausführung mit Details;
- Fig. 2: eine weitere schematische seitliche geschnittene Ansicht des Anschlusssystems mit Ansatzelementen in einer ersten und einer zweiten Ausführung.

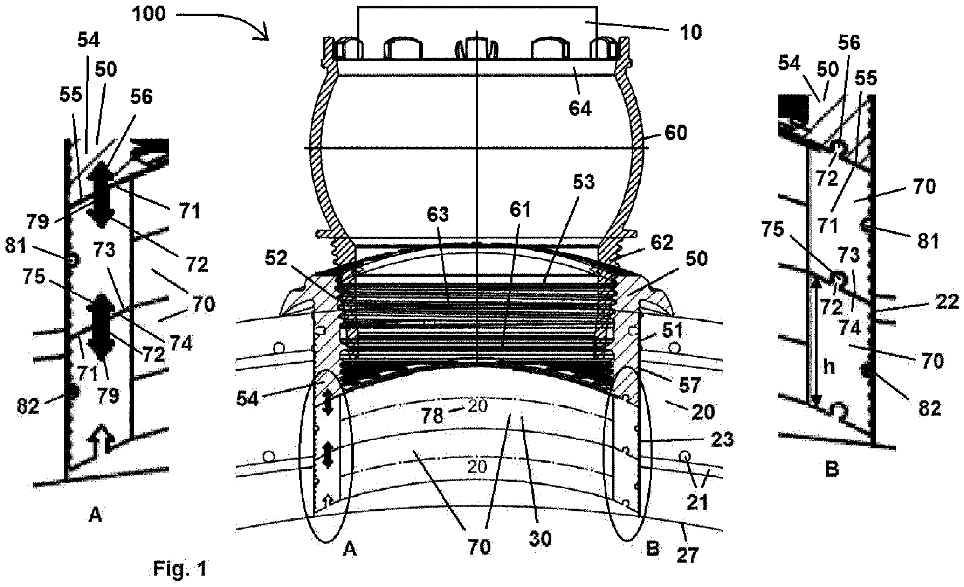

In der Fig. 1 ist eine schematische seitliche geschnittene Ansicht des Anschlusssystems 100 mit Ansatzelementen 70 in einer ersten und einer zweiten Ausführung gezeigt. Im Detail ist hier die Ausbildung des Installationseinsatzes 50 bei dem erfindungsgemäßen Anschlusssystem 100 dargestellt.

Der Installationseinsatz 50 umfasst einen Endabschnitt 54. Der Endabschnitt 54 des Installationseinsatzes 50 ist der Abschnitt des Installationseinsatzes 50, der dem Inneren des Hauptrohres 20 bei der Installation in der Queröffnung 30 des Hauptrohres 20 zugewandt ist.

Der Installationseinsatz 50 weist eine äußere Anlagefläche 57 auf, mit der er im Verbindungszustand die Hauptrohrinnenfläche 23 kontaktiert. Durch das Vorsehen von Dichtungsmitteln und / oder Rippen, kombiniert mit einer bestimmten Materialauswahl, die weich oder elastisch ausgebildet sein kann, wird die Dichtheit zwischen der äußeren Anlagefläche 57 des Installationseinsatzes 50 und der Hauptrohrinnenfläche 23 des Hauptrohres 20 hergestellt.

Am Endabschnitt 54 des Installationseinsatzes 50 ist ein Ansatzelement 70 angeordnet, wobei das Ansatzelement 70 mit dem Installationseinsatz 50 fest, sicher und fluiddicht verbunden ist.

Das Detail A der Fig. 1, dargestellt auf der linken Seite, zeigt eine erste Ausführung an Ansatzelementen 70.

Das unmittelbar mit dem Installationseinsatz 50 verbundene Ansatzelement 70 weist ein pfeilförmig ausgebildetes erstes Ansatzelementverbindungsmittel 72 auf, das an der ersten Ansatzelementstirnfläche 71 ausgebildet ist und in diese Ansatzelementstirnfläche 71 eingesenkt ist. Das Verbindungsmittel 56 des Installationseinsatzes 50 ist ebenso pfeilförmig ausgebildet und in die Stirnfläche 55 des Installationseinsatzes 50 eingesenkt. Die Form des ersten Ansatzelementverbindungsmittels 72 und des Verbindungsmittels 56 ist gleich, beide weisen einen Hinterschnitt auf.

Das Ansatzelement 70, welches eine erste Ansatzelementstirnfläche 71 aufweist, die kongruent zur Form der Stirnfläche 55 am Endabschnitt 54 des Installationseinsatzes 50 ausgebildet ist, ist so geformt, dass die erste Ansatzelementstirnfläche 71 ein erstes Ansatzelementverbindungsmittel 72 aufweist, und ein an dem der ersten Ansatzelementstirnfläche 71 gegenüberliegenden Ende 73 eine zweite Ansatzelementstirnfläche 74 ausgebildet ist, die an die Form der Innenoberfläche 27 des Hauptrohres 20, des Schachts, oder dergleichen im Bereich der Queröffnung 30 angepasst ist.

Ein weiteres mit diesem Ansatzelement 70 verbundenes Ansatzelement 70 ist wie vorstehend beschrieben geformt und ausgebildet.

Das mit dem Installationseinsatz 50 verbundene Ansatzelement 70 und das mit diesem Ansatzelement 70 verbundene Ansatzelement 70 ist jeweils mit einem Verbindungselement 79, das etwa im Querschnitt doppelpfeilförmig ausgebildet ist, verbunden. Hierzu greift das Verbindungselement 79 in das Verbindungsmittel 56 am Endabschnitt 54 des Installationseinsatzes 50 und in das an der ersten Ansatzelementstirnfläche 71 ausgebildete erste Ansatzelementverbindungsmittel 72 des Ansatzelements 70 ein, bzw. greift das Verbindungselement 79 in das am Ansatzelement 70 an der zweiten Ansatzelementstirnfläche 74, die der ersten Ansatzelementstirnfläche 71 gegenüberliegt, in das an der zweiten Ansatzelementstirnfläche 74 ausgebildete zweite Ansatzelementverbindungsmittel 75 und in das an der ersten Ansatzelementstirnfläche 71 ausgebildete erste Ansatzelementverbindungsmittel 72 des benachbarten Ansatzelements 70 ein.

Hierdurch ist eine feste und sichere sowie fluiddicht ausgebildete Verbindung zwischen dem Installationseinsatz 50 und einem Ansatzelement 70, sowie zwischen diesem Ansatzelement 70 und einem benachbarten Ansatzelement 70 hergestellt.

Das Detail B der Fig. 1, dargestellt auf der rechten Seite, zeigt eine zweite Ausführung an Ansatzelementen 70, die pilzkopfförmig ausgebildete erste Ansatzelementverbindungsmittel 71 und zweite Ansatzelementverbindungsmittel 75 aufweisen.

Das unmittelbar mit dem Installationseinsatz 50 verbundene Ansatzelement 70 weist ein pilzkopfförmig ausgebildetes erstes Ansatzelementverbindungsmittel 72 auf, das an der ersten Ansatzelementstirnfläche 71 ausgebildet ist und von dieser Ansatzelementstirnfläche 71 hervorsteht. Das Verbindungsmittel 56 des Installationseinsatzes 50 ist ebenso pilzkopfförmig ausgebildet und in die Stirnfläche 55 des Installationseinsatzes 50 eingesenkt. Die Form des ersten Ansatzelementverbindungsmittels 72 und des Verbindungsmittels 56 ist kongruent zueinander ausgebildet, wobei das Verbindungsmittel 56 des Installationseinsatzes 50 einen Hinterschnitt besitzt.

Das Ansatzelement 70, welches eine erste Ansatzelementstirnfläche 71 aufweist, die kongruent zur Form der Stirnfläche 55 am Endabschnitt 54 des Installationseinsatzes 50 ausgebildet ist, ist so geformt, dass die erste Ansatzelementstirnfläche 71 ein erstes Ansatzelementverbindungsmittel 72 aufweist, und ein an dem der ersten Ansatzelementstirnfläche 71 gegenüberliegenden Ende 73 eine zweite Ansatzelementstirnfläche 74 ausgebildet ist, die an die Form der Innenoberfläche 27 des Hauptrohres 20, des Schachts, oder dergleichen im Bereich der Queröffnung 30 angepasst ist.

Ein weiteres mit diesem Ansatzelement 70 verbundenes Ansatzelement 70 ist wie vorstehend beschrieben geformt und ausgebildet.

Das mit dem Installationseinsatz 50 verbundene Ansatzelement 70 und das mit dem Ansatzelement 70 verbundene Ansatzelement 70 ist jeweils ohne ein gesondertes Verbindungselement verbunden.

Für die Verbindung des Installationseinsatzes 50 mit dem Ansatzelement 70 greift das Verbindungselement 79 in das Verbindungsmittel 56 am Endabschnitt 54 des Installationseinsatzes 50 und in das an der ersten Ansatzelementstirnfläche 71 ausgebildete erste Ansatzelementverbindungsmittel 72 des Ansatzelements 70 ein.

Für die Verbindung des vorstehend bezeichneten Ansatzelement 70 mit einem weiteren benachbarten Ansatzelement 70 greift das Verbindungselement 79 in das am Ansatzelement 70 an der zweiten Ansatzelementstirnfläche 74, die der ersten Ansatzelementstirnfläche 71 gegenüberliegt, und die das Ende 73 des Ansatzelements 70 zum Inneren des Hauptrohrs 20 darstellt, in das an der zweiten Ansatzelementstirnfläche 74 ausgebildete zweite Ansatzelementverbindungsmittel 75 und in das an der ersten Ansatzelementstirnfläche 71 ausgebildete erste Ansatzelementverbindungsmittel 72 des benachbarten Ansatzelements 70 ein. Hierdurch ist eine feste und sichere sowie fluiddicht ausgebildete Verbindung zwischen dem Installationseinsatz 50 und einem Ansatzelement 70, sowie zwischen diesem Ansatzelement 70 und dem benachbarten Ansatzelement 70 hergestellt.

Zusätzlich ist in der Fig. 1, Detail B, noch gezeigt, dass ein Ansatzelement 70 eine Höhe h aufweist. Die Höhe h kann variabel sein, was vorstehend bereits beschrieben ist.

Als Hilfe zur Bemessung der Art und Anzahl an notwendigen Ansatzelementen 70, um die Hauptrohrinnenfläche 23 des Hauptrohres 20 zu bedecken und so zu schützen, kann die auf der Innenseite jedes Ansatzelements 70 aufgebrachte Längenangabe 78 genutzt werden. Mit Hilfe der Längenangabe 78, die beispielsweise auf die Innenseite des Ansatzelements 70 geprägt ist, kann nach Ausmessen der Dicke der Wandung des Hauptrohres 20 an der Queröffnung 30 in einfacher Weise die Art und Anzahl an Ansatzelementen 70 ermittelt werden.

In der Fig. 1 ist gezeigt, dass zwei Ansatzelemente 70, jeweils von einer Höhe h von 20 mm, worauf die Längenangabe 78 jedes Ansatzelements 70 verweist, notwendig sind, um zusammen mit dem Installationseinsatz 50 die Hauptrohrinnenfläche 23 des Hauptrohres 20 zu bedecken und so zu schützen.

In der Fig. 1 ist weiter gezeigt, dass an der Außenoberfläche jedes Ansatzelements 70 Aufnahmeräume 81 ausgebildet sind, die beispielsweise in Form einer umlaufenden Vertiefung geformt sind, um dort ein Dichtungselement 82 aufzunehmen. Bevorzugt ist das Dichtungselement 82 ein unter Zutritt von Wasser quellendes Dichtungselement.

Auf diese Weise kann eine verbesserte Dichtfunktion zwischen den Ansatzelementen 70 des Installationseinsatzes 50 und der Hauptrohrinnenfläche 23 des Hauptrohres 20 hergestellt werden. Sollte es dazu kommen, dass Feuchtigkeit in den Zwischenraum zwischen der äußeren Anlagefläche der Ansatzelemente 70 und der Hauptrohrinnenfläche 23 des Hauptrohres 20 gelangt, so wird das unter Zutritt von Wasser quellende Dichtungselement 82 aktiviert, expandiert und dichtet zusätzlich ab.

Das Anschlusssystem 100 gemäß vorliegender Erfindung ist in der Queröffnung 30 des Hauptrohres 20 derart positioniert, dass der Endabschnitt 54 des Installationseinsatzes 50 entsprechend er ermittelten Wanddicke des Hauptrohres 20 an der Queröffnung 30 soweit mit einem oder mehreren Ansatzelementen 70 verlängert ist, dass das dem Hauptrohr 20 zugewandte Ende des Ansatzelements 70 nicht über den inneren Rand der Queröffnung 30 des Hauptrohres 20 in das Innere des Hauptrohres 20 hineinragt.

Der Anschlussstutzen 60 ist dann soweit - beispielsweise zweieinhalb Umdrehungen - in den Installationseinsatz 50 eingedreht, dass die Dichtheit des Anschlusssystems 100 hergestellt ist.

Durch diese Technik ist sichergestellt, dass eine vollständige Dichtheit des Anschlusssystems 100 durch ein sicheres und dichtes Anliegen der äußeren Anlagefläche 57 des Installationseinsatzes 50 und des bzw. der Ansatzelemente an der Hauptrohrinnenfläche 23 des Hauptrohres 20 vorliegt.

Dadurch ist die Dichtheit gegen ein Hinterlaufen bzw. Hinterwandern der äußeren Anlagefläche 57 des Installationseinsatzes 50 und des bzw. der Ansatzelemente 70 sichergestellt. Wenn dies geschehen ist, ist der ordnungsgemäße Sitz des Anschlusssystems 100 erreicht.

Insbesondere sind so alle frei liegenden Bewehrungen 22 des Hauptrohres 20 im Bereich der Queröffnung 30 bei der Installation bedeckt und geschützt.

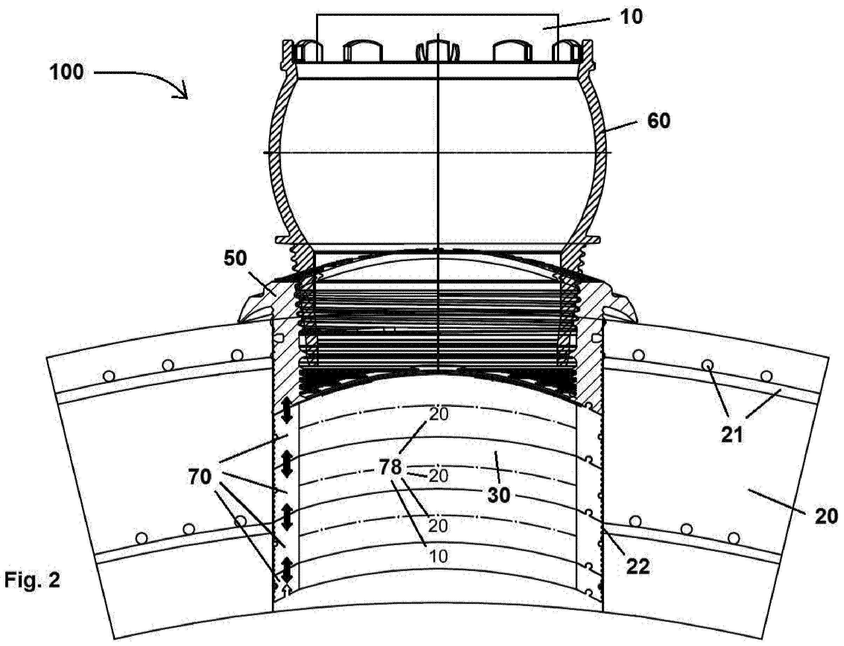

In der Fig. 2 ist eine weitere schematische seitliche geschnittene Ansicht des Anschlusssystems 100 mit Ansatzelementen 70 in einer ersten und einer zweiten Ausführung gezeigt. Im Detail ist hier die Ausbildung des Installationseinsatzes 50 bei dem erfindungsgemäßen Anschlusssystem 100 dargestellt.

Die Bezugszeichen in Fig. 2 entsprechen denen aus Fig. 1.

Das Hauptrohr 20 in Fig. 2 weist erkenntlich eine wesentlich größere Wanddicke auf, als das in der Fig. 1 dargestellte Hauptrohr 20.

Um bei dem Anschlusssystems 100 nach Fig. 2 einen vollständigen Schutz der Hauptrohrinnenfläche 23 des Hauptrohres 20 zu gewährleisten, sind drei Ansatzelemente 70, jeweils von einer Höhe h von 20 mm, und ein Ansatzelement 70 von einer Höhe h von 10 mm notwendig, um zusammen mit dem Installationseinsatz 50 die Hauptrohrinnenfläche 23 des Hauptrohres 20 zu bedecken und so zu schützen.

So kann durch die vorliegende Erfindung in einfacher Weise durch eine Kombination von Art und Anzahl an Ansatzelementen 70 ein Anschlusssystem 100 bereitgestellt werden, welches bei unterschiedlichen Wanddicken eines Hauptrohres 20 stets einen sicheren Schutz der freiliegenden Bewehrung 22 der Bewehrung 21 des Hauptrohres 20 vor dem schädlichen Einfluss von Feuchtigkeit und Sauerstoff gewährleistet.

Die Verbindung des Installationseinsatzes 50 mit dem Ansatzelement 70 und die Verbindung dieses Ansatzelements 70 mit einem benachbarten Ansatzelement 70 erfolgt analog zur Beschreibung bei Fig. 1, insbesondere bezugnehmende auf die dort dargestellten Details A und B.

### Bezugszeichenliste

- 10: Rohr
- 20: Hauptrohr
- 21: Bewehrung
- 22: freiliegende Bewehrung
- 23: Hauptrohrinnenfläche
- 27: Innenoberfläche
- 30: Queröffnung
- 50: Installationseinsatz
- 51: Außenseite
- 52: konischer Schraubbereich
- 53: Innenseite
- 54: Endabschnitt
- 55: Stirnfläche
- 56: Verbindungsmittel
- 57: äußere Anlagefläche
- 60: Anschlussstutzen
- 61: Eingriffsende
- 62: Mittelteil
- 63: Außengewinde
- 64: Antriebsende
- 70: Ansatzelement
- 71: erste Ansatzelementstirnfläche
- 72: erstes Ansatzelementverbindungsmittel
- 73: Ende
- 74: zweite Ansatzelementstirnfläche
- 75: zweites Ansatzelementverbindungsmittel
- 78: Längenangabe
- 79: Verbindungselement
- 81: Nut
- 82: Dichtelement
- 100: Anschlusssystem
- A: Detail
- B: Detail
- h: Höhe

## Patentansprüche

1. Anschlusssystem (100) zum Anschließen eines Rohres (10) an ein Hauptrohr (20), einen Schacht, oder dergleichen, an einer Queröffnung (30), wobei das Anschlusssystem (100) zu diesem Zweck mit dem Hauptrohr (20) oder dem Schacht verbindbar ist, mit einem hohlstopfenförmigen, zumindest teilweise weichen Installationseinsatz (50), dessen Außenseite (51) an die Queröffnung (30) angepasst werden kann, und dessen Innenseite (53)
einen konischen Schraubbereich (52) aufweist, wobei der Installationseinsatz (50) einen Endabschnitt (54) aufweist, der durch die Queröffnung (30) des Hauptrohres (20) oder Schachts in dieses / diesen teilweise einschiebbar ist, und wobei eine äußere Anlagefläche (57) des Installationseinsatzes (50) in einem Verbindungszustand, in dem das Anschlusssystem (100) mit dem Hauptrohr (20) oder Schacht verbunden ist, wenigstens teilweise eine Hauptrohrinnenfläche (23), die an die Queröffnung (30) angrenzt und diese umgibt, kontaktiert,
und
einem relativ härteren Anschlussstutzen (60), der ein Eingriffsende (61), einen konischen Mittelteil (62) mit Außengewinde (63) und ein Antriebsende (64) aufweist, **dadurch gekennzeichnet, dass**
an dem Endabschnitt (54) des Installationseinsatzes (50) eine Stirnfläche (55) ausgebildet ist, die ein Verbindungsmittel (56) aufweist,
und dass ein Ansatzelement (70), welches eine erste Ansatzelementstirnfläche (71) aufweist, die kongruent zur Form der Stirnfläche (55) am Endabschnitt (54) des Installationseinsatzes (50) ausgebildet ist, wobei die erste Ansatzelementstirnfläche (71) ein erstes Ansatzelementverbindungsmittel (72) aufweist, und ein an dem der ersten Ansatzelementstirnfläche (71) gegenüberliegenden Ende (73) eine zweite Ansatzelementstirnfläche (74) ausgebildet ist, die an die Form der Innenoberfläche (27) des Hauptrohres (20), des Schachts, oder dergleichen im Bereich der Queröffnung (30) angepasst werden kann, mit dem Installationseinsatz (50) verbunden ist.

2. Anschlusssystem (100) nach Anspruch 1, **dadurch gekennzeichnet, dass** das Verbindungsmittel (56) an der Stirnfläche (55) am Endabschnitt (54) des Installationseinsatzes (50) einen Hinterschnitt aufweist.

3. Anschlusssystem (100) nach Anspruch 1 oder 2, **dadurch gekennzeichnet, dass** das Verbindungsmittel (56) pfeilförmig und / oder pilzkopfförmig geformt ist.

4. Anschlusssystem (100) nach einem der vorangehenden Ansprüche, **dadurch gekennzeichnet, dass** das erste Ansatzelementverbindungsmittel (72) des Ansatzelements (70) kongruent zur Form des Verbindungsmittels (56) an der Stirnfläche (55) am Endabschnitt (54) des Installationseinsatzes (50) ausgebildet ist oder die gleiche Form wie das Verbindungsmittel (56) an der Stirnfläche (55) am Endabschnitt (54) des Installationseinsatzes (50) aufweist.

5. Anschlusssystem (100) nach einem der vorangehenden Ansprüche, **dadurch gekennzeichnet, dass** das Ansatzelement (70) eine zweite Ansatzelementstirnfläche (74) aufweist, die der ersten Ansatzelementstirnfläche (71) gegenüberliegt, wobei an der zweiten Ansatzelementstirnfläche (74) ein zweites Ansatzelementverbindungsmittel (75) ausgebildet ist, und wobei das zweite Ansatzelementverbindungsmittel (75) des Ansatzelements (70) kongruent zur Form des ersten Ansatzelementverbindungsmittels (72) ausgeformt ist oder die gleiche Form wie das erste Ansatzelementverbindungsmittel (72) aufweist.

6. Anschlusssystem (100) nach Anspruch 5, **dadurch gekennzeichnet, dass** das Ansatzelement (70) eine Höhe (h) von 10 mm (Millimeter) oder von 15 mm oder von 20 mm oder von 25 mm oder von 30 mm aufweist.

7. Anschlusssystem (100) nach einem der vorangehenden Ansprüche, **dadurch gekennzeichnet, dass** der Anschlussstutzen (60) und / oder das Ansatzelement (70) ein Polymermaterial enthält oder aus einem Polymermaterial besteht, wobei das Polymermaterial bevorzugt ein Thermoplast, und besonders bevorzugt ein Polyolefin, wie beispielsweise eine Polypropylen oder ein Polyethylen oder eine Polybutylen oder ein Copolymeres der Vorgenannten, oder ein Polyvinylchlorid ist, und / oder dass der Installationseinsatz (50) ein elastomeres Polymermaterial enthält oder aus einem solchen besteht.

8. Rohrsystem mit wenigstens einem Anschlusssystem (100) nach einem der Ansprüche 1 bis 7.

## Claims

1. Connection system (100) for connecting a pipe (10) to a main pipe (20), a shaft, or the like, at a transverse opening (30), the connection system (100) being connectable for this purpose to the main pipe (20) or the shaft, comprising
a hollow stopper-shaped, at least partly soft installation insert (50), the outer side (51) of which can be adapted to the transverse opening (30) and the inner side (53) of which has a conical screw region (52), wherein the installation insert (50) has an end section (54), which can be pushed partly into the main pipe (20) or shaft through the transverse opening (30) thereof, and wherein an outer bearing surface (57) of the installation insert (50), in a connection state in which the connection system (100) is connected to the main pipe (20) or shaft, is at least partly in contact with a main pipe inner surface (23), which borders and surrounds the transverse opening (30),
and
a relatively harder connecting piece (60), which has an engagement end (61), a conical centre part (62) with an external thread (63), and a drive end (64),
**characterised in that**
a face (55) which has a connecting means (56) is formed on the end section (54) of the installation insert (50),
and an adapter element (70), which has a first adapter element face (71) congruent with the shape of the face (55) on the end section (54) of the installation insert (50), the first adapter element face (71) having a first adapter element connecting means (72), and a second adapter element face (74), which is formed on the end (73) opposite the first adapter element face (71) and can be adapted to the shape of the inner surface (27) of the main pipe (20), the shaft, or the like, in the region of the transverse opening (30), is connected to the installation insert (50).

2. Connection system (100) according to claim 1, **characterised in that** the connecting means (56) on the face (55) on the end section (54) of the installation insert (50) has an undercut.

3. Connection system (100) according to claim 1 or 2, **characterised in that** the connecting means (56) is arrow-shaped and/or has a mushroom head shape.

4. Connection system (100) according to one of the preceding claims, **characterised in that** the first adapter element connecting means (72) of the adapter element (70) is congruent with the shape of the connecting means (56) on the face (55) on the end section (54) of the installation insert (50) or is the same shape as the connecting means (56) on the face (55) on the end section (54) of the installation insert (50).

5. Connection system (100) according to one of the preceding claims, **characterised in that** the adapter element (70) has a second adapter element face (74), which is opposite the first adapter element face (71), wherein a second adapter element connecting means (75) is formed on the second adapter element face (74), and wherein the second adapter element connecting means (75) of the adapter element (70) is congruent with the shape of the first adapter element connecting means (72) or is the same shape as the first adapter element connecting means (72).

6. Connection system (100) according to claim 5, **characterised in that** the adapter element (70) has a height (h) of 10 mm (millimetres) or of 15 mm or of 20 mm or of 25 mm or of 30 mm.

7. Connection system (100) according to one of the preceding claims, **characterised in that** the connecting piece (60) and/or the adapter element (70) contains a polymer material or consists of a polymer material, wherein the polymer material is preferably a thermoplastic material and particularly preferably a polyolefin, such as for example a polypropylene or a polyethylene or a polybutylene or a copolymer of the above, or is a polyvinyl chloride, and/or that the installation insert (50) contains an elastomeric polymer material or consists of such a material.

8. Pipe system having at least one connection system (100) according to one of claims 1 to 7.

## Revendications

1. Système de raccordement (100) pour raccorder un tuyau (10) à un tuyau principal (20), un puits ou similaire, sur une ouverture transversale (30), dans lequel le système de raccordement (100) peut être relié à cette fin au tuyau principal (20) ou au puits, avec un insert d'installation (50) en forme de bouchon creux, au moins en partie mou, dont le côté extérieur (51) peut être adapté à l'ouverture transversale (30) et dont le côté intérieur (53) présente une zone à visser conique (52), dans lequel l'insert d'installation (50) présente une section d'extrémité (54), qui peut être enfilée par l'ouverture transversale (30) du tuyau principal (20) ou du puits dans celui-ci, et dans lequel une surface d'appui extérieure (57) de l'insert d'installation (50) établit au moins un contact partiel avec une surface intérieure de tuyau principal (23), qui jouxte l'ouverture transversale (30) et l'entoure, dans un état de liaison, dans lequel le système de raccordement (100) est relié au tuyau principal (20) ou au puits,
et
une tubulure de raccordement (60) relativement plus dure, qui présente une extrémité de prise (61), une partie centrale conique (62) avec un filetage extérieur (63) et une extrémité d'entraînement (64),
**caractérisé en ce que**
est réalisée sur la section d'extrémité (54) de l'insert d'installation (50) une face frontale (55), qui présente un moyen de liaison (56),
et qu'un élément d'appendice (70), lequel présente une première face frontale d'élément d'appendice (71), qui est réalisée de manière congruente par rapport à la forme de la face frontale (55) sur la section d'extrémité (54) de l'insert d'installation (50), dans lequel la première face frontale d'élément d'appendice (71) présente un premier moyen de liaison d'élément d'appendice (72), et une deuxième face frontale d'élément d'appendice (74), qui peut être adaptée à la forme de la surface intérieure (27) du tuyau principal (20), du puits ou similaire dans la zone de l'ouverture transversale (30), est réalisée sur l'extrémité (73) faisant face à la première face frontale d'élément d'appendice (71), est relié à l'insert d'installation (50).

2. Système de raccordement (100) selon la revendication 1, **caractérisé en ce que** le moyen de liaison (56) présente une contre-dépouille sur la section d'extrémité (54) de l'insert d'installation (50) sur la face frontale (55).

3. Système de raccordement (100) selon la revendication 1 ou 2, **caractérisé en ce que** le moyen de liaison (56) est formé en forme de flèche et/ou en forme de tête de champignon.

4. Système de raccordement (100) selon l'une quelconque des revendications précédentes, **caractérisé en ce que** le premier moyen de liaison d'élément d'appendice (72) de l'élément d'appendice (70) est réalisé de manière congruente par rapport à la forme du moyen de liaison (56) sur la face frontale (55) sur la section d'extrémité (54) de l'insert d'installation (50) ou présente la même forme que le moyen de liaison (56) sur la face frontale (55) sur la section d'extrémité (54) de l'insert d'installation (50).

5. Système de raccordement (100) selon l'une quelconque des revendications précédentes, **caractérisé en ce que** l'élément d'appendice (70) présente une deuxième face frontale d'élément d'insert (74), qui fait face à la première face frontale d'élément d'appendice (71), dans lequel un deuxième moyen de liaison d'élément d'insert (75) est réalisé sur la deuxième face frontale d'élément d'insert (74), et dans lequel le deuxième moyen de liaison d'élément d'appendice (75) de l'élément d'appendice (70) est formé de manière congruente par rapport à la forme du premier moyen de liaison d'élément d'appendice (72) ou présente la même forme que le premier moyen de liaison d'élément d'appendice (72).

6. Système de raccordement (100) selon la revendication 5, **caractérisé en ce que** l'élément d'appendice (70) présente une hauteur (h) de 10 mm (millimètre) ou de 15 mm ou de 20 mm ou de 25 mm ou de 30 mm.

7. Système de raccordement (100) selon l'une quelconque des revendications précédentes, **caractérisé en ce que** la tubulure de raccordement (60) et/ou l'élément d'appendice (70) contiennent un matériau polymère ou sont constitués d'un matériau polymère, dans lequel le matériau polymère est de manière préférée une matière thermoplastique, et de manière particulièrement préférée une polyoléfine, comme un polypropylène ou un polyéthylène ou un polybutylène ou un copolymère des éléments susmentionnés, ou est un polychlorure de vinyle, et/ou que l'insert d'installation (50) contient un matériau polymère élastomère ou est constitué d'un matériau de ce type.

8. Système de tuyaux avec au moins un système de raccordement (100) selon l'une quelconque des revendications 1 à 7.
